(19) **Europäisches Patentamt / European Patent Office / Office européen des brevets**

(11) **EP 3 383 740 B1**

(12) **FASCICULE DE BREVET EUROPEEN**

(45) Date de publication et mention de la délivrance du brevet:
**21.07.2021 Bulletin 2021/29**

(51) Int Cl.:
*B64D 29/00* (2006.01)   *B65D 81/20* (2006.01)
*F16L 59/06* (2006.01)   *B32B 15/085* (2006.01)
*B32B 5/02* (2006.01)   *B32B 5/18* (2006.01)
*B32B 7/05* (2019.01)   *B32B 7/08* (2019.01)
*B32B 15/04* (2006.01)   *B32B 15/14* (2006.01)
*B32B 15/18* (2006.01)   *B32B 15/20* (2006.01)
*B64C 1/40* (2006.01)   *F16L 59/065* (2006.01)

(21) Numéro de dépôt: **16819970.1**

(22) Date de dépôt: **02.12.2016**

(86) Numéro de dépôt international:
**PCT/FR2016/053189**

(87) Numéro de publication internationale:
**WO 2017/093692 (08.06.2017 Gazette 2017/23)**

(54) **PIECE ISOLANTE METALLIQUE**

ISOLIERENDES METALLTEIL

METAL INSULATING PART

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2015 FR 1561726**

(43) Date de publication de la demande:
**10.10.2018 Bulletin 2018/41**

(73) Titulaire: **HUTCHINSON**
**75008 Paris (FR)**

(72) Inventeurs:
• **CHOPARD, Fabrice**
**38400 Saint Martin d'Heres (FR)**
• **FAVIER, Yann**
**69380 Dommartin (FR)**

• **HUILLET, Cédric**
**45200 Montargis (FR)**
• **BOURASS, Hmad**
**45200 Amilly (FR)**
• **THENAULT, Yannick**
**49240 Avrille (FR)**
• **DOMINIAK, Christophe**
**45290 Varennes Changy (FR)**

(74) Mandataire: **Ernest Gutmann - Yves Plasseraud S.A.S.**
**c/o Plasseraud IP**
**66, rue de la Chaussée d'Antin**
**75440 Paris Cedex 09 (FR)**

(56) Documents cités:
**EP-A1- 2 345 770      EP-A1- 2 829 689**
**WO-A1-2015/121540    DE-A1-102011 002 248**
**JP-A- 2006 275 186    JP-A- 2014 163 494**

EP 3 383 740 B1

**Description**

La présente invention concerne le domaine de la gestion thermique.

Est concernée en particulier une pièce isolante sous atmosphère contrôlée (notamment pièce isolée sous vide ; PIV ou VIP en anglais : vacuum insulated panel) et son procédé de fabrication.

Des publications de brevets (telle US 9157230, JP 2006275186 A) ont déjà traité de ces sujets.

Un problème demeure toutefois en liaison avec la tenue dans le temps de la pièce, donc sa fiabilité et son efficacité dans la gestion thermique de l'environnement où il est placé, cela d'autant plus si cet environnement est soumis à des normes sévères, comme dans le domaine aérospatial où des éléments sous vide sont très rarement préconisés, compte tenu du risque de fuite inhérent, donc de perte de vide et de fonctionnalité.

Sans spécifiquement cité les domaines d'applications critiques, US 9157230 propose une pièce PIV prévue pour diminuer la fuite de chaleur vis-à-vis d'une structure face à laquelle la pièce sera disposée.

Mais le procédé de fabrication décrit impose une mise en œuvre contraignante qui ne se justifie pas aux yeux des inventeurs en ce qu'il ne permet pas, selon leur opinion, de garantir suffisamment une longévité décennale ou multi-décennale aux pièces, dans des conditions opérationnelles satisfaisantes.

Un aspect de l'invention vise à traiter ce problème et préjugé, qui devient critique quand un défaut de qualité de gestion thermique n'est pas acceptable pendant des années, dans un environnement difficile : contraintes thermiques importantes autour d'un moteur, risques d'agressions chimiques, voire mécaniques lors d'une maintenance, cycles successifs des contraintes thermiques appliquées, dans un environnement vibratoire et avec des variations de pression (si application aéronautique en particulier).

De surcroît, il s'avère analyse faite que ce n'est pas la finesse de la (des) feuilles métalliques qui est en cause, ni le fait qu'elles sont directement scellées ensemble en continu, ni même la conductivité thermique précitée.

En fait, il s'est avéré que le défaut précité de qualité de gestion thermique pouvait être réduit si les conditions d'un soudage étaient revues et le taux de fuite à cet endroit maîtrisé.

De fait, il est ici proposé qu'une soudure continue de l'enceinte, réalisée sous dépression et/ou atmosphère contrôlée, soit telle qu'elle présente un taux de fuite inférieur à $10^{-6}$ Pa.m$^3$/s, après un premier traitement thermique selon la norme RTCA-DO 160-G section 5 Cat A (de -55°C à 400°C) et un second traitement thermique à -196°C pendant 1 heure, l'épaisseur de la ou des feuilles métalliques pouvant n'être qu'inférieure à 1mm, ceci sans limite quant à leur conductivité thermique, celle globale du pièce devant être inférieure à 100mW/m.K à 20°C et dans un environnement sous pression atmosphérique, sur la gamme des températures possibles d'utilisation de ce pièce, soit au moins de -200°C à 600°C, voire de -269°C à 1100°C.

L'épaisseur précitée de 1mm, notamment avec des matériaux comme cités ci-dessous, permettra de confondre les conductivités thermiques globale du pièce et intrinsèque de cette(ces) feuille(s) métallique(s), car la diffusion thermique et les pertes thermiques sont alors faibles.

Dans la présente demande :

- « pièce » a pour sens une pièce ou un élément, plan ou non (en trois dimensions), de forme quelconque,
- « dépression » a pour sens pression inférieure à la pression ambiante (donc < $10^5$Pa). Une pression entre $10^{-3}$Pa et moins de $10^5$Pa dans l'enceinte pourra en particulier convenir,
- « atmosphère contrôlée » a pour sens un gaz ayant une conductivité thermique inférieure à celle de l'air ambiant, soit inférieure à 26mW/m.K, tel le $CO_2$, ou l'Argon,
- « soudage » (ou soudure) est, selon le sens reconnu dans la technique, considéré(e) comme exclusif d'un brasage (ou d'une brasure) avec apport d'un matériau (typiquement métal ou alliage) de nature différente des pièces assemblées. En brasage, le matériau d'apport a une température de fusion typiquement inférieure à celle(s) des pièces assemblées. Ainsi, tout soudage ou « scellement » sera ici réalisé sans matériau d'apport et avec fusion locales des matériaux des pièces. Et le soudage (la soudure) sera continu(e), donc pas de type points par points, « spot welding » en anglais). A ce sujet, concernant les essais de brasures, ils n'ont pas été concluants. Des formations d'inter-métalliques rendant le scellement fragile ont été constatés. De plus sceller par brasure nécessiterait la mise au point et l'utilisation de cadre métallique spécifique à chaque pièce induisant des coûts importants et des difficultés de mise en œuvre.

En termes de procédé, la solution devient un procédé de fabrication d'une pièce isolante, comprenant des étapes où :

- on fournit deux feuilles métalliques ou deux portions d'une dite feuille métallique réservant entre elles un espace, la ou chaque feuille métallique étant d'épaisseur inférieure à 1mm et étant choisie dans le groupe comprenant l'acier inoxydable, le titane l'aluminium et d'autres métaux à conductivité thermique inférieure à 100 mW/m.K à 20°C et dans un environnement sous pression atmosphérique,

- on place la et/ou les feuilles métalliques dans une chambre de soudage, à dépression et/ou atmosphère contrôlée,
- on établit une dépression inférieure à $10^5$ Pa dans la chambre et on y soude directement entre elles, en continu, lesdites feuilles métalliques ou portions de dite feuille métallique (qu'il ait eu ou non une partie de soudure antérieure hors chambre), de sorte qu'ainsi :

-- ledit espace définisse une enceinte interne en dépression et/ou sous atmosphère contrôlée,
-- la soudure présente un taux de fuite inférieur à $10^{-6}$ Pa.m$^3$/s, après le premier traitement thermique précité, et
-- une pièce isolante est formée qui présente une conductivité thermique inférieure à 100 mW/m.K à 20°C et dans un environnement sous pression atmosphérique.

Ci-avant, on aura noté que, par rapport à la norme RTCA-DO 160-G section 5 Cat A, la température maximale du test a été ramenée de 550°C à 400°C.

Et, favorablement, les taux de fuite à l'endroit de la soudure devront être identiques (à 20% près) avant l'application du test selon la norme et après.

Pour favoriser l'efficacité de l'isolation, voire la tenue mécanique, il est proposé que, préalablement à l'étape d'établissement de la dépression, on enferme un matériau cœur inorganique ou organique entre les deux feuilles métalliques ou les deux portions de dite feuille métallique. Ainsi, les mises en dépression de la chambre de soudage, pour la soudure, et de l'enceinte interne en particulier pour limiter la conductivité thermique seront en outre opérantes, ce qui n'aurait pas été le cas avec un matériau cœurminéral.

Et pour réaliser en pratique l'étape de soudage, on recourra de préférence à l'un parmi un soudage à la molette, sous faisceau d'électrons, un soudage diffusion, un soudage par induction et un soudage par micro-plasma, le tout donc dans une dite chambre de soudage, à atmosphère contrôlée, comme précité.

Il a en outre été noté qu'en utilisant (au moins) une feuille mince métallique grainée pour réaliser l'enveloppe fermée, on disposera d'une réserve de déformation de matière utile en particulier pour les zones de pliure ou pour absorber une partie au moins des déformations des parois de l'enveloppe dues notamment à des contraintes thermiques. La rigidité d'ensemble sera aussi améliorée pour les feuilles les plus minces.

De fait, on doit comprendre l'expression « feuille mince métallique grainée » comme une feuille présentant au moins une zone de réserve de matière :

- utile à la formation des bords et/ou des zones de pliure, notamment quand un volume ou une enceinte devant contenir un isolant thermique est à créer,
- et/ou à l'absorption de dilatations thermiques, lorsque deux températures très éloignées sont respectivement appliquées de part et d'autre de la pièce, comme dans des applications aéronautique et cryogénique.

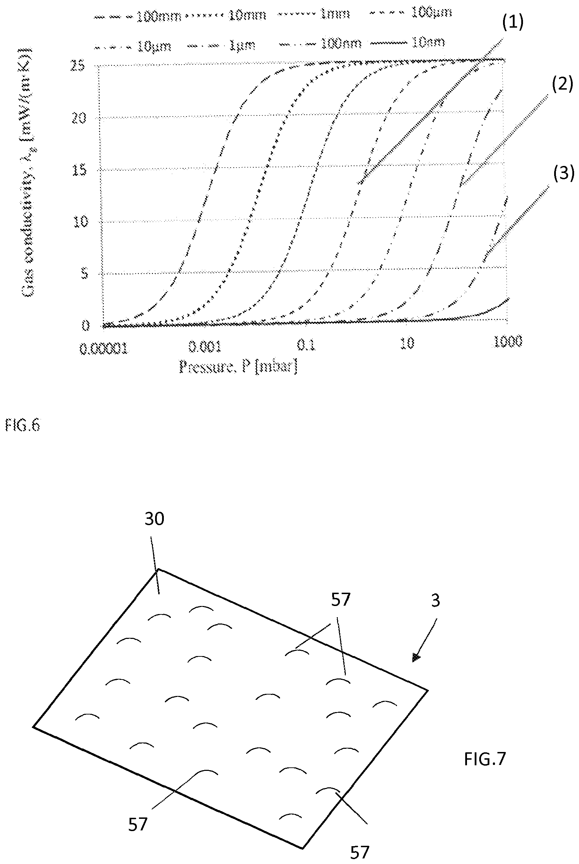

Ainsi, une alternative à un réel grainage comme figure 7 ci-après, pourrait consister en la prévision d'au moins une zone en accordéon dépliable sous un certain effort.

Un autre problème que l'invention a pris en compte concerne l'identification de la perte d'isolation de la pièce, si elle survient.

En tant que solution pertinente, il est proposé que ladite pièce isolante, présentant tout ou partie des caractéristiques précitées, soit associée à un capteur à disposer extérieurement du côté d'une seconde face du pièce opposée à une première face où se trouve la structure à protéger thermiquement, le capteur étant adapté à fournir une information visuelle, acoustique mécanique ou électrique, ou magnétique.

Un avantage, qui s'est révélé a posteriori, de la pièce isolante, si elle est en dépression, est qu'elle peut procurer non seulement un effet isolant thermique mais aussi un effet de limitation de la transmission de certaines fréquences, avec un effet potentiel sur certaines vibrations et/ou sur l'acoustique.

Une conséquence à cela est la possibilité avérée que ladite pièce isolante soit disposée :

- dans un pylône de liaison entre un moteur d'aéronef et une aile,
- ou dans une nacelle de moteur d'aéronef comprenant une structure interne fixe (IFS) pourvue de ladite pièce isolante (ici PIV), lequel présentera une forme incurvée.

Dans les deux cas, il s'agit d'une évolution importante compte tenu des préjugés existants qui excluaient les pièces PIV du monde aéronautique ou aérospatial, en particulier à proximité des moteurs d'engins volants, et notamment les turbomoteurs double flux.

Une autre application dans le domaine de la cryogénie prévoit l'utilisation d'au moins une dite pièce thermiquement isolante, sous atmosphère contrôlée en pression et/ou composition, sur un échangeur ou une cuve de stockage respectivement soumis(e) :

- à une température comprise entre -150°C et -273°C,
- et à une différence de températures entre un volume interne et un environnement extérieur supérieure à 100°C.

Si nécessaire, l'invention sera encore mieux comprise et d'autres caractéristiques, détails et avantages de celle-ci apparaîtront encore à la lecture de la description qui suit, faite à titre d'exemple non limitatif et en référence aux dessins annexés, dans lesquels :

- la figure 1 est un schéma d'une pièce conforme à l'invention, la figure 2 en est la coupe suivant la ligne II-II, la figure 3 une vue éclatée, avant assemblage, et les figures 10,11,12 trois alternatives ;
- les figures 4 et 5 schématisent deux applications de ces pièces ;
- la figure 6 montre des courbes de variation de conductivité (À) en fonction de la pression, pour quelques cœurs de pièces,
- la figure 7 schématise un grainage de feuille métallique,
- la figure 8 schématise une chambre à atmosphère contrôlée contenant un dispositif de soudage périmétrique de la pièce ;
- la figure 9 schématise une pliure multiple là où le cordon continu de soudure est à réaliser,
- et la figure 13 schématise l'existence d'entretoises pour un soutien mécanique interne des feuilles métalliques.

Un objectif de la présente invention est ainsi de créer un pièce sous atmosphère contrôlée (en pression et/ou en composition), hermétiquement soudé, résistant à la perforation, peu coûteux, à longévité effective de plusieurs années (10 ans et plus sont visés, ou plus de 50000 cycles d'utilisation) de taille et de forme arbitraire et à haute résistance thermique R donc à forte capacité de réduire les transferts thermiques là où il est installé.

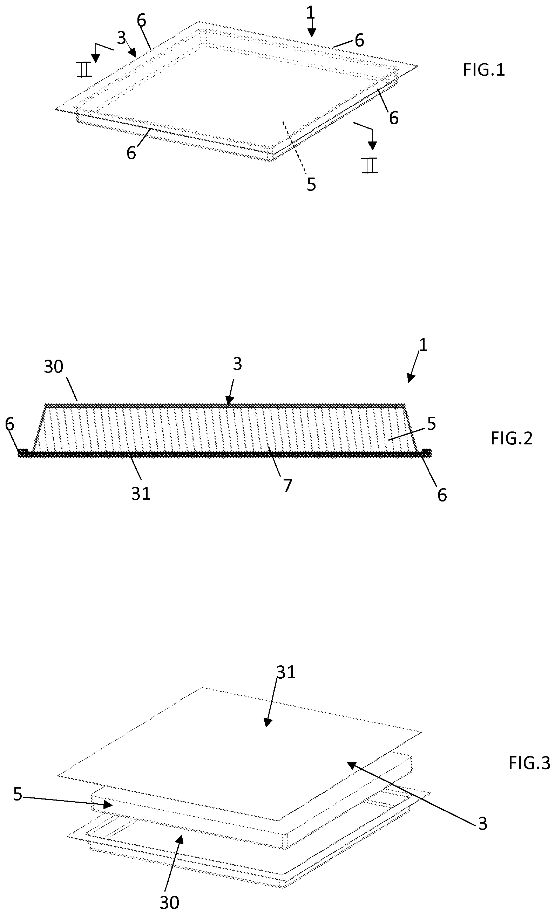

Un mode de réalisation illustré notamment sur les figures 1-3 montre une pièce thermiquement isolante 1 comprenant une enveloppe fermée, étanche à l'air 3 (voir taux de fuite en cause) définissant une enceinte 7 fermée sous atmosphère contrôlée.

Cette atmosphère contrôlée peut consister en la présence d'un gaz ayant une conductivité thermique inférieure à 26mW/m.K (air stagnant).

A titre complémentaire ou alternatif, l'atmosphère contrôlée peut consister en une pression inférieure à la pression atmosphérique.

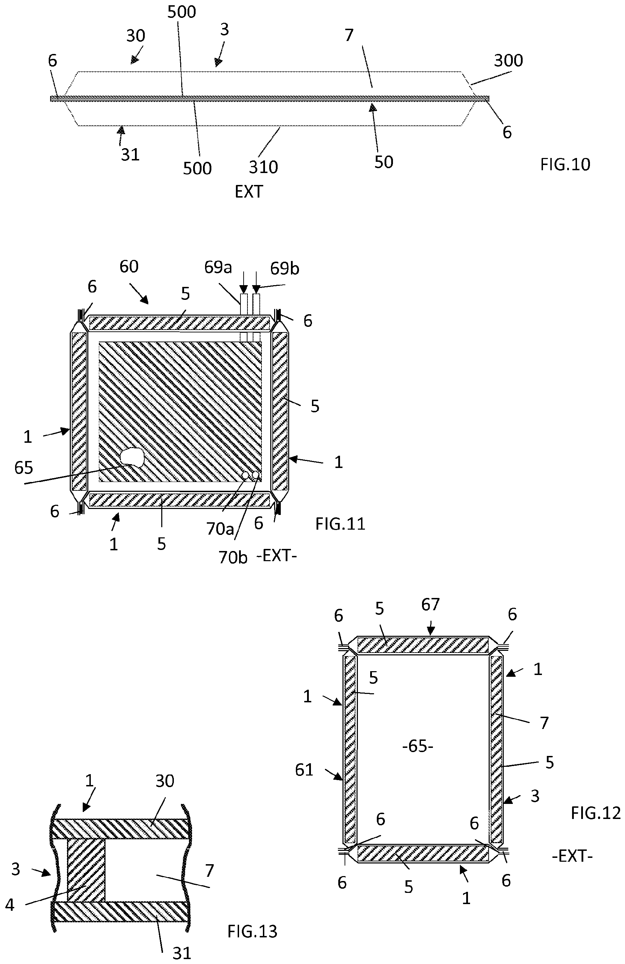

Bien que l'enceinte 7 puisse ne rien contenir en tant qu'élément structurel à visée d'isolation ou de barrière thermique, elle renferme ici, comme préféré, pour la qualité de cette isolation, un isolant thermique, comme figures 1-3, ou un écran thermo-réflecteur, comme schématisé figure 10.

Dans le mode de réalisation des figures 1-3, l'isolant thermique est poreux. Ceci est avantageux. « Poreux » désigne ici un matériau possédant des interstices permettant le passage de l'air. Les matériaux poreux, à cellules ouvertes, incluent donc les mousses mais également les matériaux fibreux (tels que la laine de verre ou de roche). Les interstices de passage que l'on peut qualifier de pores ont des tailles inférieures à 1 ou 2mm de façon à pouvoir garantir une bonne isolation thermique, et de préférence à 1micron, et préférentiellement encore à $10^{-9}$m (structure nano-poreuse), pour des questions en particulier de tenue mécanique et/ou au vieillissement, et donc de possible dépression moins forte dans l'enceinte.

Parmi les isolants fibreux, ceux minéraux sont définis dans la norme NF B 20-001. Les isolants fibreux minéraux se regroupent en deux grandes familles : les laines de roche volcanique ou de laitier et les laines de verre.

Dans la réalisation telle que schématisée figures 1-3, l'isolant thermique définit un matériau cœur 5 organique ou inorganique, pas minéral.

Ce matériau est structurant pour la pièce 1, c'est-à-dire qu'il participe à la tenue mécanique de la pièce. Dans cette réalisation, le c'est un monolithe.

Un matériau cœur 5 comprenant un aérogel sera favorablement considéré, comme tenu des avantages en termes de de conductivité thermique, densité, résistance mécanique, capacité à être moulé dans des formes complexes.

Dans les versions illustrées, l'enveloppe 3 comprend deux feuilles métalliques 30,31. L'expression « métal » couvre les alliages. A priori les deux feuilles seront identiques, à la taille près. En alternative, on pourrait n'utiliser qu'une seule feuille métallique, repliée sur elle-même, de façon à n'avoir à souder que sur trois côtés si la pièce en présente quatre comme figures 1-3 (ce qui n'est pas limitatif). Dans une telle situation, le soudage périphérique 6 s'opérerait sur deux portions (les deux rabats) de cette feuille métallique unique.

S'il est prévu, le matériau cœur 5 (ou l'écran 50 présenté ci-après) sera bien sûr interposé entre les feuilles 30,31. Dans une alternative comme figure 13, des entretoises 4 pourraient soutenir mécaniquement les feuilles 30,31. Il pourra s'agir de plots répartis entre les feuilles, dans l'enceinte 7. Chaque entretoise 4 aura favorablement une conductivité thermique inférieure ou égale à 130 mW/m.K, à 20°C et dans un environnement sous pression atmosphérique.

L'atmosphère contrôlée dans l'enceinte 7 est un paramètre majeur de la pièce 1 car elle lui permet d'assurer la fonction de super isolant thermique, si le matériau cœur 5 est un isolant thermique, et de préférence un isolant micro ou nanoporeux, a priori en combinaison avec une dépression (par rapport à la pression atmosphérique environnante) dans l'enceinte 7.

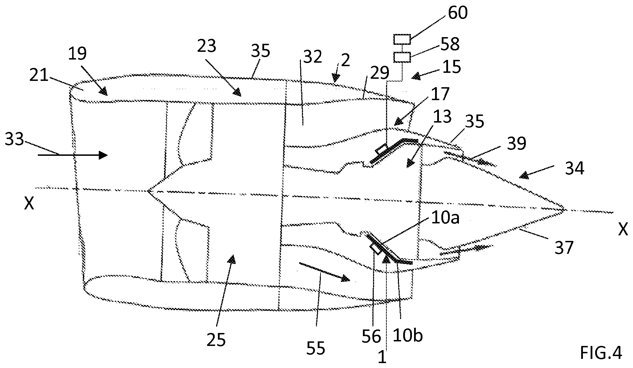

De fait, associer une enveloppe 3 performante et une atmosphère contrôlée, et en particulier dépressurisée, dans l'enceinte 7 permettra d'obtenir un PIV à longue durée de vie pouvant être installé en particulier dans la nacelle 15, à l'endroit de la structure interne 17 (encore appelée inner fixed structure ou IFS) qui entoure la partie amont du turboréacteur 13, comme schématisé figure 4.

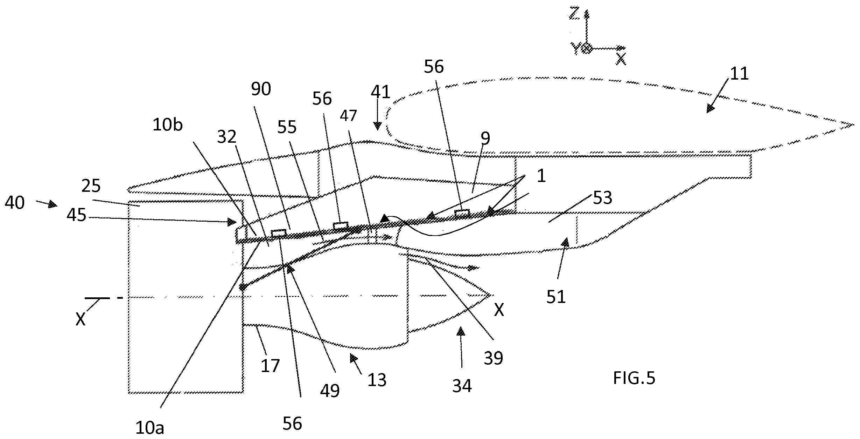

Une autre possibilité très pertinente est, comme schématisé figure 5, une installation dans un pylône 9 de liaison entre une aile 11 d'aéronef et le moteur 13 disposé dans une nacelle, l'aile pouvant être remplacée par un fuselage d'aéronef, si le moteur 13 est fixé à lui, comme cela existe sur certains appareils, typiquement latéralement, en arrière des ailes.

Dans le premier cas (comme figure 4), la nacelle 15 comprend, le long de l'axe longitudinal XX du moteur, une section amont 19 avec une lèvre d'entrée d'air 21, une section médiane 23 entourant une soufflante 25 du turboréacteur 13 et une section aval 27. La section aval comprend ladite structure interne 17 (IFS), une structure externe (encore appelée outer fixed structure ou OFS) 29 et un capot mobile (non représenté). L'IFS 17 ainsi que l'OFS 29 délimitent une veine 32 permettant le passage d'un flux d'air 33 entrant dans le moteur, ici dans la soufflante 25.

Un sommet 35 de la nacelle reçoit un pylône d'attache (qui peut être la structure 9 ci-après) permettant de fixer la nacelle 15 à une aile de l'aéronef (non représenté figure 4). Longitudinalement la nacelle 15 se termine par une tuyère d'éjection 34 comprenant un module externe 35 et un module interne 37 définissant entre eux un canal d'écoulement de flux d'air primaire 39, dit chaud, sortant du turboréacteur 13.

C'est dans la structure interne 17 (IFS) que sont disposées les pièces 1, chacun ayant avantageusement une forme incurvée, en particulier cintrée. Une forme individuelle globalement en secteur d'anneau conviendra bien, l'ensemble définissant alors une forme annulaire, avec des secteurs circonférentiellement bout à bout.

Dans le second cas (comme figure 5), les pièces 1 sont disposées dans (ou plaquées sous) la structure primaire 43 d'un dispositif d'accrochage 41. Il pourra typiquement y avoir plusieurs pièces 1 placées successivement en ligne le long du bord inférieur sensiblement plat 90 du pylône 9.

L'ensemble moteur 40 destiné à être fixé sous l'aile 11 (ou donc sur le côté d'un fuselage 110) comporte en effet ici un dispositif d'accrochage 41 et le moteur 13 accroché avec, dessous dans le cas de l'aile. Globalement, le dispositif d'accrochage 41 comporte une structure rigide 9, portant des moyens d'accrochage du moteur, ces moyens d'accrochage, à fixer à l'aile ou au fuselage, disposant d'une pluralité d'attaches moteur 45,47, ainsi que d'un dispositif 49 de reprise d'efforts. Sous la structure rigide 43 se trouve ici le carénage aérodynamique arrière 51 du dispositif d'accrochage du moteur, qui est donc interposé entre la voilure et le moteur 13 concerné. Ce carénage 51 peut comporter deux pièces latérales 53 prévues pour être épousées extérieurement par le flux secondaire 55 du moteur.

En particulier dans les deux applications qui précèdent, et plus généralement quand la sécurité le requiert, on pourra disposer des capteurs 56 extérieurement du côté d'une seconde face 10b (moins chaude) de la/des pièces isolantes 1 opposée à une première face 10a où se trouve la source ou la structure à isoler (ici une partie du corps chaud du moteur). Chaque capteur sera actif ou passif et pourra fournir une information visuelle, mécanique ou électrique. Les capteurs de contrainte, de température, d'impédance et acoustique sont particulièrement adaptés. Ainsi, par un paramètre indirect capté sur ou à proximité immédiate des pièces 1 et transmis à un calculateur 58 puis à un dispositif 60 d'affichage ou d'alerte, il sera possible d'informer de l'état de préservation de ces pièces, et spécifiquement de la préservation du vide dedans.

A noter aussi qu'en plus d'une protection thermique, on attend des deux solutions ci-avant, compte tenu de la dépression existant dans l'enceinte 7 et du fait de la limitation de la transmission de certaines fréquences, un effet potentiel acoustique dans l'application IFS (premier cas) et un effet potentiel sur certaines vibrations dans l'application à une structure primaire de pylône d'accrochage (second cas).

Deux autres applications sont schématisées figures 11 et 12. Il s'agit respectivement d'un échangeur 60 et d'une cuve 61 de stockage, notamment pour y stocker des tubes contenant des liquides organiques, pour l'industrie pharmaceutique ou des laboratoires biomédicaux.

Dans les deux cas, tout ou partie des parois de l'échangeur ou de la cuve est constitué comme la pièce 1. Un volume utile interne 65 de l'échangeur 60 ou de la cuve 61 est ainsi isolé thermiquement de l'environnement extérieur (EXT).

La température dans le volume utile interne 65 sera comprise entre -150°C et -273°C et la différence de températures entre le volume 65 et cet environnement extérieur (EXT ; 67) sera supérieure à 100°C.

Le volume 65 de la cuve 61 peut être fermé par un couvercle 67 ouvrable ou séparable, formé aussi comme une pièce 1.

Dans l'échangeur 60, des entrées 69a,69b et sorties 70a,70b de fluides permettent la circulation d'au moins deux fluides à placer en échange thermique dans l'échangeur 60 que les pièces 1 protègent thermiquement, en périphérie. Si les entrées et sorties de fluides doivent traverser au moins une pièce 1, une étanchéité autour de chaque passage sera assurée, typiquement par un cordon de soudure 6 continu.

Dans les deux cas, tout ou partie des parois de protection de l'échangeur ou de la cuve est constitué comme la pièce 1. Un volume utile interne 65 de l'échangeur 60 ou de la cuve 61 est ainsi isolé thermiquement de l'environnement extérieur (EXT).

La température dans le volume utile interne 65 sera comprise entre -150°C et -273°C et la différence de températures entre le volume 65 et cet environnement extérieur (EXT ; 67) sera supérieure à 100°C.

Le volume 65 de la cuve 61 peut être fermé par un couvercle 67 ouvrable ou séparable, formé aussi comme une pièce 1.

Quelle que soit l'application c'est, dans chaque pièce 1, l'atmosphère contrôlée qui y règne qui supprimera (réduira) la composante gazeuse de la conductivité thermique. Cependant à haute température, comme dans les deux applications ci-avant, la composante radiative peut avoir une grande influence. On peut absorber cette composante via l'opacité du matériau. Cette absorption dépend directement du coefficient d'extinction moyen A de Rosseland du matériau (voir tableau ci-dessous), quand celui-ci comprend au moins un bloc isolant poreux :

| Composition | $A$ (m$^2$/kg) |
|---|---|
| $SiO_2$ | 22,7 |
| $SiO_2$ opacifié | 84,2 |
| $TiO_2$ | 32,6 |
| $ZrO_2$ | 38,9 |
| Carbone | > 1 000 |
| Résorcinol-formaldéhyde (RF) | 50,1 |
| Mélamine-formaldéhyde (MF) | 47,2 |
| Polyurêthane | 47,6 |
| Polystyrêne | 47,8 |

On notera ainsi l'intérêt, dans des applications où la température atteint sensiblement ou dépasse les 200°C, voire 700°C et même davantage dans le second cas, à ce que les blocs de matériau cœur 5 aient un coefficient d'extinction moyen A de Rosseland supérieur ou égal à 30. Tel est le cas d'un gel de silice, ou de la composition carbonée pyrolysée présentée dans FR-A-2996850 et dont l'évolution À=f(P) est montrée figure 6 (courbe 2) que l'on recommande, dans sa version pyrolysat (voir figure 6 ; courbe 3), pour réaliser alors la structure interne 5, en ce qu'il s'agit du pyrolysat d'un gel monolithique polymérique organique ou dudit gel sous forme d'un monolithe de carbone poreux super isolant thermique. Les courbes de la figure 6 représentent l'évolution de la conductivité thermique gazeuse en fonction de la pression, pour différents matériaux poreux organiques ou inorganiques. Les valeurs 10nm, 100nm, 100 microns... sont les tailles caractéristiques des pores du matériau concerné. Ainsi la courbe 3 représente le cas d'un matériau nanoporeux (aérogel), la courbe 2 représente le cas d'un matériau microporeux ayant des pores de 1micron et la courbe 1 représente le cas d'un matériau microporeux ayant des pores de 100microns.

Avec de tels blocs ou monolithes, on pourra former un isolant thermique 5 à effet mécaniquement structurant (le polyuréthane pouvant être une alternative, bien que notablement moins performante thermiquement). Un avantage du pyrolysat de la composition présentée dans FR-A-2996850 est toutefois qu'il n'est pas inflammable.

En alternative, voire en complément, un écran thermo-réflecteur 50, pourra être contenu dans l'enceinte 7, comme illustré figure 10, afin de limiter les échanges radiatifs (rayonnement thermique) à travers la pièce. Il pourra s'agir d'un écran à couches multiples. L'élément écran thermo-réflecteur 50, métallique, pourra être fixé, y compris soudé, avec l'une au moins des feuilles métalliques 30,31 pour son maintien en place dans l'enceinte 7. On notera l'intérêt à ce que, dans ce cas, les feuilles 30,31 soient chacune formées en cuvette et disposées face à face, comme illustré, de façon que la face convexe, respectivement 300,310, soit tournée vers l'extérieur (EXT), avec toujours la soudure périmétrique 6 continue.

Ainsi, on peut envisager des protections dont la fonction isolante sera assurée par un vide assez poussé (typiquement moins de 10$^{-1}$Pa) en association avec des films thermo-réflecteurs 500. Ce seront avantageusement des feuillards dont le coefficient de réflexion des ondes thermiques, entre 0.1μm et 100 μm de longueur d'ondes, sera suffisamment élevé pour stopper la chaleur émise par rayonnement en la réfléchissant. Une solution pertinente comprendra des feuillards métalliques constituant une enveloppe avec une pression interne <10$^3$Pa et un ou plusieurs films thermo-réflecteurs d'épaisseur totale inférieure à 100cm. Chaque film devra avoir une émissivité très faible: idéalement < 0,1. Une autre solution avec une succession de couche de film de mylar™ aluminisé et de feutre isolant est aussi possible.

Quelle que soit la nature de l'élément 5, et même si une atmosphère par exemple de CO2 dans l'enceinte 7 pourrait convenir dans certains cas moins exigeants en termes d'isolation thermique, il est considéré que c'est malgré tout la pression dans l'enceinte qui permettra aux pièces 1 d'atteindre une conductivité thermique réellement faible. En pratique, la pression dans l'enceinte 7 sera ainsi favorablement comprise entre 0,00001 mbar et moins de 1000 mbar (1000 mbar = $10^5$ Pa), en début de vie (dans l'année ou les mois qui suivent la fabrication). En outre, avec une pression interne de 1Pa, des feuilles et un matériau cœur 5 selon FR29966856 d'une épaisseur de 10mm, un taux de fuite comme précité (typiquement $10^{-10}$ Pa.m$^3$/s), la pièce 1 garantira une pression interne de $10^3$Pa (10mbar) au maximum après au moins 50000 cycles de température selon la norme RTCA-DO 160-G section 5 Cat A (de -55°C à 400°C), avec des taux de fuite identiques (à 20% près) avant l'application du test selon la norme et après.

A ce sujet, on peut déduire de la figure 6 que, si la pression maximale admissible dans l'enceinte 7, en fin ou début de vie du pièce 1, est fixée à 100 mbar, alors aucun matériau dont la porosité est supérieure à 10nm ne pourra être performant comme l'est tant le gel de la courbe (2) que son pyrolysat (courbe 3), par rapport à un cœur 5 à base de PU (polyuréthane) ; courbe (1).

Une dépression dans l'enveloppe 3 créera une différence de pression, qui peut atteindre $10^5$ Pa, entre le milieu externe et l'enceinte 7. L'enveloppe 3 ne pourra absorber seule cette contrainte si son épaisseur est inférieure à 1mm. C'est alors le matériau cœur (structure 5) qui subira la compression. Des renforts dans ce matériau pourront aider encore davantage à soutenir l'enveloppe 3. Ces renforts peuvent être des cales ou des structures particulières comme des nids d'abeilles. Aucune entretoise, autre qu'un matériau cœur 5 organique ou inorganique, ne peut toutefois être envisagée dans l'enceinte 7 en ce qu'elle pourrait créer/créerait un pont thermique entre les deux feuilles 30,31.

Si la ou l'une au moins des feuilles 30,31 est en métal grainé (réalisé par exemple par des rouleaux bosselés), avec donc des dômes 57 comme schématisé figure 7, on pourra aussi améliorer la tenue mécanique de la pièce 1.

Un ou plusieurs getters (ou pièges à gaz) servant à empêcher l'oxydation du matériau cœuret à fixer les gaz qui pénètrent dans l'enceinte 7 par la jonction 6 ou qui sont émis par le cœur 5 au cours de son cycle de vie pourront être prévus. Chaque getter permettra de limiter l'augmentation de la pression et de capter l'humidité, d'où un impact sur la conductivité.

Quoi qu'il en soit, la pièce 1 présentera sur une gamme de température de -200°C à 600°C une conductivité thermique comprise entre 1mW/m.K et 300W/m.K, et favorablement inférieure à 26mW/m.K (air), à 20°C et dans un environnement sous pression atmosphérique.

Et selon une caractéristique essentielle à la tenue du pièce dans le temps comme déjà indiqué, la soudure 6 continue de la(des) feuilles métalliques de l'enveloppe, réalisée sous atmosphère contrôlée, présentera un taux de fuite inférieur à $10^{-6}$ Pa.m$^3$/s, et inférieur à $10^{-9}$Pa.m$^3$/s pour des épaisseurs de feuilles 30,31 supérieures à 70 $\mu$m, après un premier traitement thermique selon la norme RTCA-DO 160-G section 5 Cat A (de -55°C à 400°C) et un second traitement thermique à -196°C pendant 1 heure. Ceci permettra au moins d'exclure la possibilité que la(les) feuilles 30,31 soient doublées de plastique par exemple et qu'il n'y ait pas de soudage direct métal/métal, chaque feuille formant de fait et a priori la limite tant interne qu'externe de l'enveloppe 3.

La pression interne de l'enceinte 7 pourra ainsi être maintenue pendant des durées de l'ordre de 10 ans et un peu plus.

Le taux de fuite s'exprime selon l'équation suivante :

$$\tau = \Delta padmissible \, . \, \frac{Volume \, sous \, vide}{Dur\acute{e}e \, de \, vie}$$

$\Delta padmissible$ est la différence, en Pa, entre la pression admissible en fin de vie dans la pièce et celle en début de vie ;
Le *Volume sous vide* est le volume de l'enceinte 7, en m$^3$ ;
La *Durée de vie* s'exprime en s.

Par exemple pour une protection constituée d'une enceinte 7 de 1L de Volume sous vide, une durée de vie de 3 ans correspond à un taux de fuite de $10^{-8}$ Pa.m$^3$/s. Ci-dessous est présenté un tableau référençant les taux de fuite et les durées de vie pour une protection d'un volume d'un litre et une différence de pression en fin de vie de 10mbar.

| | | |
|---|---|---|
| 1.E-04 | 1 | jour |
| 1.E-05 | 12 | jours |
| 1.E-06 | 116 | jours |
| 1.E-07 | 3 | années |
| 1.E-08 | 32 | années |
| 1.E-09 | 317 | années |

(suite)

| Taux de fuite mbar.L/s | | |
|---|---|---|

Les taux de fuites seront mesurés suivant les normes :

- Norme ISO 17025 : Exigences de qualité et de compétence propres aux laboratoires d'essais et d'analyses,
- Norme ISO 3530 : Technique du vide - Etalonnage des spectromètres de masse détecteurs de fuites.

Un test à l'hélium pourra être requis si le taux de fuite à mesurer est inférieur à $10^{-4}$ Pa.m$^3$/s. Au-dessus, on pourra utiliser un test air sous eau.

Un point important sera donc en fait lié au type de soudure 6 réalisée.

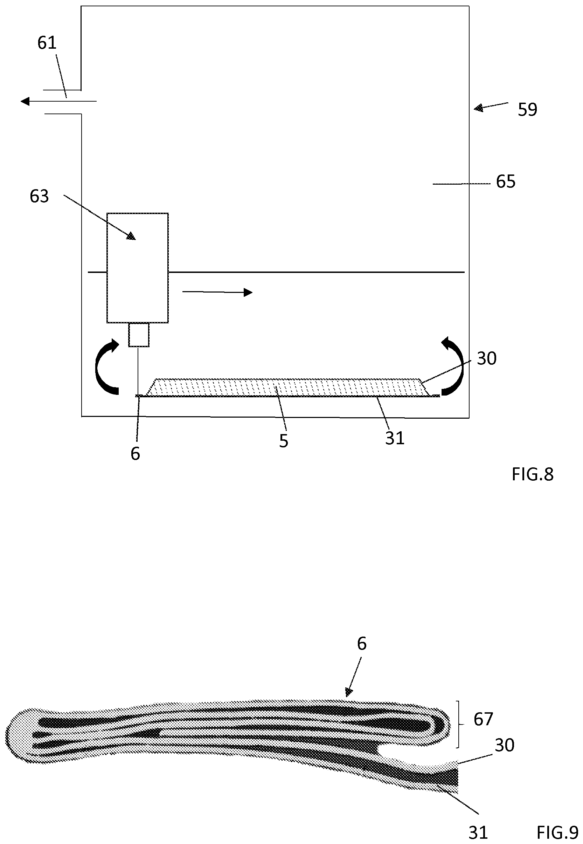

La figure 8 schématise le fait qu'il s'agit d'une soudure 6 réalisée sous atmosphère contrôlée, directement dans le volume interne 65' d'une chambre à atmosphère contrôlée 59.

Grace à un système d'évacuation de gaz 61, il y règne une pression inférieure à $10^5$ Pa, de préférence entre $10^{-6}$ Pa et $10^2$ Pa, et encore de préférence inférieure à $10°$ Pa.. Et c'est donc dans cette chambre 59 qu'une machine de soudage 63 a été préalablement placée. Après que la dépression adaptée aura été réalisée dans le volume 65', cette machine effectuera donc le soudage en zone 6, en une seule ligne continue, là où on aura de préférence serré ensemble les feuilles ou les portions concernées.

En alternative, ou en complément, le système 61 pourrait servir à substituer du CO2 à de l'air dans le volume 65 de la chambre 59.

Il est aussi possible que seule une partie de la soudure continue 6 soit réalisée dans de la chambre 59. Ainsi, on peut prévoir de souder en continu hors de la chambre 59 trois côtés sur les quatre dans la solution de la figure 1, le quatrième étant soudé en continu dans la chambre 59 fermée. L'important est que l'atmosphère contrôlée de la chambre puisse atteindre le volume interne 7 avant fermeture complète périphérique de ce volume, via la soudure 6.

Même si d'autres soudages sous atmosphère contrôlée peuvent être prévus, favorablement ce scellement comprendra l'un parmi un soudage à la molette, sous faisceau d'électrons, un soudage diffusion, un soudage par induction et un soudage par micro-plasma réalisé donc avec la machine 63 adaptée.

Ainsi, si un matériau cœur 5 organique ou inorganique est prévu, il suffira le moment venu :

- d'enfermer le matériau cœurentre les feuilles (ou portions de feuille) 30,31 métalliques,
- avant ou après, de placer dans la chambre 59 cette ou ces feuilles enfermant le matériau cœur,
- d'établir dans le volume 65 une dépression inférieure à $10^5$ Pa, de préférence inférieure ou égal à $10^{-4}$ Pa pour un soudage par faisceau d'électrons ou par diffusion,
- et d'y souder ainsi directement entre elles, en continu, ces feuilles ou portions de feuille,
- ceci jusqu'à obtenir, autour du matériau cœur 5, l'enceinte dépressurisée précitée 7, avec le taux de fuite très réduit déjà indiqué pour la soudure 6. On ouvrira alors la chambre 59 et récupèrera une pièce 1 prête à l'emploi.

Pour tester le taux de fuite de la soudure 6, on fera subir à la pièce 1 un premier traitement thermique selon la norme RTCA-DO 160-G section 5 Cat A (de -55°C à 400°C) et un second traitement thermique à -196°C pendant 1 heure. En pratique, les taux de fuite à l'endroit de la soudure devront être identiques (à 20% près) avant l'application du test selon la norme et après.

Plus l'épaisseur de métal à l'endroit de la soudure 6 à réaliser sera faible (typiquement sous 0,5mm), plus le taux le taux de fuite attendu sera difficile à atteindre.

Pour une application (telle l'aéronautique) où le poids est un paramètre critique, si l'épaisseur de la(des) feuilles 30,31 est, par feuille, inférieur à 0,5mm (par exemple pour des feuilles en acier inoxydable de type 304L, d'environ 0,08mm d'épaisseur), il est conseillé qu'à l'endroit de tout le pourtour de la soudure 6 les feuilles ou les portions concernées présentent un pliage sur elles-mêmes, tel un double pliage, repéré 67 figure 9.

Trois autres paramètres ont été notés comme pouvant avoir de l'influence sur la performance attendue de la pièce 1 dans le temps. On recommande ainsi:

- que leur dureté soit comprise entre 300 N/mm$^2$ et 2350 N/mm$^2$,
- et que leur résistance mécanique Rm soit supérieure ou égale à 20MPa,
- et que l'allongement à la rupture soit compris entre 5% et 50%.

En effet :

Concernant l'allongement à la rupture : Parmi les métaux les plus ductiles on trouve le bronze avec un allongement de 50% et le zinc avec 80%. Par ailleurs, le zinc et l'aluminium ne sont pas adaptés à des tenues en température supérieure à 200°C, qui peuvent atteindre environ 700°C et même davantage dans une application IFS par exemple. Quant aux céramiques, elles présentent des allongements d'environ 0,0001%. Cependant un matériau avec un allongement inférieur à 5% n'est pas formable (même en formage à chaud). Ainsi il pourrait être délicat, pour certaines applications, de réaliser une pièce 1 performante, si l'allongement à la rupture n'est pas compris entre 5% et 50% (à température ambiante).

Cet allongement pourra être mesuré par un essai de traction suivant la norme « EN ISO 6892-1 : Matériaux métalliques - Essai de traction - Partie 1 : méthode d'essai à température ambiante. »

Concernant la résistance mécanique (Rm) : Les métaux présentent des résistances mécaniques typiquement comprises entre 4Mpa et 3000Mpa. Si l'on exclut l'or et le plomb, inusités, la valeur inférieure de Rm peut donc être fixée à 20Mpa. Cette résistance mécanique est mesurable par un essai en traction ou de dureté ; Pour un essai en traction, se référer à la norme ci-dessus ; Pour un essai en dureté, voir ci-dessous.

Concernant la dureté : L'enveloppe 3 est définie comme un contenant qui possède les propriétés suivantes en dureté au niveau de sa jonction 6, après un test selon la norme RTCA-DO 160-G section 5 Cat A (de -55°C à 400°C). L'essai de dureté pourra mesurer une dureté Vickers selon les normes :

- EN ISO 6507-1 - Essai de dureté Vickers - Méthode d'essai
- EN ISO 6507-2 - Essai de dureté Vickers - Vérification et étalonnage des machines d'essais
- EN ISO 6507-3 - Essai de dureté Vickers - Etalonnage des blocs de référence.

Les essais sur les pièces 1 testés indiquent une dureté de 200 HV (660 N/mm$^2$). Cependant si l'on se réfère aux bornes de la plage de valeur de la résistance mécanique des alliages d'acier et du titane, la dureté devra favorablement être comprise entre 90HV (310 N/mm$^2$) et 670HV (environ 2350 N/mm$^2$). L'aluminium et le zinc ont des duretés inférieures.

## Revendications

1. Pièce isolante comprenant une enveloppe étanche définissant une enceinte interne (7) :

   - sous dépression, et/ou
   - sous atmosphère contrôlée remplie d'un gaz ayant une conductivité thermique inférieure à 26mW/m.K,

   la pièce présentant une conductivité thermique inférieure à 100mW/m.K à 20°C et dans un environnement sous pression atmosphérique, l'enveloppe étanche (3) comprenant au moins une feuille mince métallique (30,31) d'épaisseur inférieure à 1mm, dont le métal est choisi dans le groupe comprenant l'acier inoxydable, le titane l'aluminium et d'autres métaux à conductivité thermique inférieure à 300W/m.K, à 20°C et dans un environnement sous pression atmosphérique, ladite au moins une feuille mince métallique (30,31) étant soudée périphériquement pour maintenir l'enceinte sous dépression et/ou atmosphère contrôlée, la soudure, qui est continue, présentant un taux de fuite inférieur à 10$^{-6}$ Pa.m$^3$/s, après un premier traitement thermique selon la norme RTCA-DO 160-G section 5 Cat A de -55°C à 400°C, et un second traitement thermique à -196°C pendant 1 heure.

2. Pièce selon la revendication 1, où l'enveloppe étanche entoure un matériau cœur (5) comprenant un isolant thermique poreux organique ou inorganique contenu dans l'enceinte interne (7).

3. Pièce selon la revendication 1, où l'enveloppe étanche renferme un écran thermo-réflecteur (50).

4. Pièce selon la revendication 1, où ladite au moins une feuille mince métallique (30,31) est grainée.

5. Pièce selon l'une des revendications précédentes, où ladite au moins une feuille mince métallique (30,31) présente :

   - une dureté comprise entre 90HV et 670HV,
   - une résistance mécanique Rm supérieure ou égale à 20MPa,
   - un allongement à la rupture compris entre 5% et 50%.

6. Ensemble pour diminuer la fuite de chaleur à partir d'une structure (13), l'ensemble comprenant la pièce isolante (1) selon l'une des revendications précédentes et un capteur (56) à disposer du côté d'une seconde face de la pièce isolante opposée à une première face où se trouve ladite structure, le capteur étant sensible à des informations de température, ou des informations visuelles, acoustiques, mécaniques, électriques, ou magnétiques.

**7.** Ensemble selon la revendication 6, dans lequel le capteur (56) est un capteur de température, capteur de contrainte, capteur d'impédance ou capteur acoustique.

**8.** Pylône de liaison entre un moteur d'aéronef et une aile (11) ou un fuselage (110) dudit d'aéronef, comprenant la pièce isolante (1) selon l'une des revendications 1 à 5, ou l'ensemble selon la revendication 6 ou 7.

**9.** Nacelle de moteur d'aéronef comprenant une structure interne fixe (17) pourvue de ladite pièce isolante (1) selon l'une des revendications 1 à 5, ou de l'ensemble selon la revendication 6 ou 7, la pièce isolante présentant une forme incurvée.

**10.** Echangeur (60) ou cuve de stockage (61) :

- soumis(e) à une température comprise entre -150°C et -273°C et à une différence de températures entre un volume interne (65) et un environnement extérieur (EXT ; 67) supérieure à 100°C,
- et comprenant au moins une dite pièce isolante (1) selon l'une des revendications 1 à 5.

**11.** Procédé de fabrication d'une pièce isolante (1), comprenant des étapes où:

- on fournit deux feuilles métalliques (30,31) ou deux portions d'une dite feuille métallique réservant entre elles un espace (70), la ou chaque feuille métallique étant d'épaisseur inférieure à 1mm, avec un métal choisi dans le groupe comprenant l'acier inoxydable, le titane, l'aluminium et d'autres métaux à conductivité thermique inférieure à 300W/m.K, à 20°C et dans un environnement sous pression atmosphérique,
- on place la ou les feuilles métalliques dans une chambre (65) à dépression,
- on établit dans la chambre (65) à_dépression :

-- une pression inférieure à $10^5$ Pa ,ou
-- une atmosphère contrôlée, en y apportant un gaz ayant une

conductivité thermique inférieure à 26mW/m.K, et on y soude directement entre elles, en continu, lesdites feuilles métalliques (30,31) ou portions de dite feuille métallique, de sorte qu'ainsi :

-- ledit espace (70) définisse une enceinte interne (7) en dépression et/ou sous atmosphère contrôlée,
-- la soudure (6) présente un taux de fuite inférieur à $10^{-6}$Pa.m$^3$/s, après un premier traitement thermique selon la norme RTCA-DO 160-G section 5 Cat A de -55°C à 400°C, et un second traitement thermique à -196°C pendant 1 heure,
-- et une pièce isolante (1) est formée qui présente une conductivité thermique inférieure à 100 mW/m.K à 20°C et dans un environnement sous pression atmosphérique.

**12.** Procédé selon la revendication 11, où préalablement à l'étape d'établissement de la dépression, on enferme un matériau cœur organique ou inorganique (5) entre les deux feuilles métalliques ou deux portions de dite feuille métallique.

**Patentansprüche**

**1.** Isolierteil mit einer abgedichteten Hülle, die einen Innenraum (7)

- unter Unterdruck und/oder
- unter kontrollierter Atmosphäre definiert

und mit einem Gas mit einer Wärmeleitfähigkeit von weniger als 26 mW/m.K gefüllt ist, wobei das Teil eine Wärmeleitfähigkeit von weniger als 100 mW/m.K bei 20 °C und in einer Umgebung unter Atmosphärendruck aufweist, wobei die abgedichtete Hülle (3) mindestens ein dünnes Metallblech (30, 31) mit einer Dicke von weniger als 1 mm aufweist, dessen Metall aus der Gruppe umfassend rostfreien Stahl, Titan, Aluminium und andere Metalle mit einer Wärmeleitfähigkeit von weniger als 300 W/m.K bei 20 °C und in einer Umgebung unter Atmosphärendruck ausgewählt ist, wobei das mindestens eine dünne Metallblech (30, 31) umfänglich geschweißt ist, um den Raum unter Unterdruck und/oder kontrollierter Atmosphäre zu halten, wobei das Schweißen, das kontinuierlich erfolgt, eine Leckrate von

weniger als 10$^{-6}$ Pa.m$^3$/s nach einer ersten Wärmebehandlung gemäß der Norm RTCA-DO 160-G Abschnitt 5 Cat A von -55 °C bis 400 °C und einer zweiten Wärmebehandlung bei -196 °C für 1 Stunde aufweist.

2. Teil nach Anspruch 1 , wobei die abgedichtete Hülle ein Kernmaterial (5) umgibt, das einen porösen organischen oder anorganischen thermischen Isolator aufweist, der in dem Innenraum (7) enthalten ist.

3. Teil nach Anspruch 1, wobei die abgedichtete Hülle einen wärmereflektierenden Schirm (50) umschließt.

4. Teil nach Anspruch 1, wobei das mindestens eine dünne Metallblech (30, 31) gekörnt ist.

5. Teil nach einem der vorhergehenden Ansprüche, wobei das mindestens eine dünne Metallblech (30, 31) aufweist:

   - eine Härte zwischen 90 HV und 670 HV,
   - eine mechanische Festigkeit Rm größer oder gleich 20 MPa,
   - eine Bruchdehnung zwischen 5 % und 50 %.

6. Anordnung zur Verringerung von Wärmeverlusten aus einer Struktur (13), wobei die Anordnung das Isolierteil (1) nach einem der vorhergehenden Ansprüche und einen Sensor (56) enthält, der auf der Seite einer zweiten Fläche des Isolierteils gegenüber einer ersten Fläche, auf der sich die genannte Struktur befindet, anzuordnen ist, wobei der Sensor für Temperaturinformationen oder visuelle, akustische, mechanische, elektrische oder magnetische Informationen empfindlich ist.

7. Anordnung nach Anspruch 6, wobei der Sensor (56) ein Temperatursensor, ein Dehnungssensor, ein Impedanzsensor oder ein akustischer Sensor ist.

8. Pylon zum Verbinden eines Flugzeugtriebwerks mit einem Flügel (11) oder Rumpf (110) des Flugzeugs, enthaltend das Isolierteil (1) nach einem der Ansprüche 1 bis 5 oder die Anordnung nach Anspruch 6 oder 7.

9. Flugzeugtriebwerksgondel mit einer festen Innenstruktur (17), die mit dem Isolierteil (1) nach einem der Ansprüche 1 bis 5 oder der Anordnung nach Anspruch 6 oder 7 versehen ist, wobei das Isolierteil eine gekrümmte Form aufweist.

10. Austauscher (60) oder Vorratsbehälter (61), der

    - einer Temperatur zwischen -150 °C und -273 °C und einer Temperaturdifferenz zwischen einem Innenraum (65) und einer äußeren Umgebung (EXT; 67) von mehr als 100 °C ausgesetzt ist,
    - und mindestens ein Isolierteil (1) nach einem der Ansprüche 1 bis 5 enthält.

11. Verfahren zur Herstellung eines Isolierteils (1), das die folgenden Schritte umfasst:

    - Bereitstellen von zwei Metallblechen (30, 31) oder zwei Abschnitten eines solchen Metallblechs, die einen Zwischenraum (70) zwischen sich aufspannen, wobei das oder jedes Metallblech weniger als 1 mm dick ist und ein Metall ausgewählt ist aus der Gruppe umfassend rostfreien Stahl, Titan, Aluminium und andere Metalle mit einer Wärmeleitfähigkeit von weniger als 300 W/m.K bei 20°C und in einer Umgebung unter Atmosphärendruck,
    - Einlegen das Blechs bzw. der Bleche in eine Unterdruckkammer (65),
    - Erzeugen in der Unterdruckkammer (65) :

      -- eines Drucks von weniger als 10$^5$ Pa, oder
      -- einer kontrollierten Atmosphäre, indem ein Gas mit einer Wärmeleitfähigkeit von weniger als 26 mW/m.K zugeführt wird,

    und dabei Verschweißen der Metallbleche (30, 31) bzw. Metallblechabschnitte direkt und kontinuierlich miteinander, so dass damit:

      -- der Zwischenraum (70) einen Innenraum (7) unter Unterdruck und/oder kontrollierter Atmosphäre definiert,
      -- die Schweißnaht (6) eine Leckrate von weniger als 10$^{-6}$ Pa.m$^3$/s aufweist, und zwar nach einer ersten Wärmebehandlung gemäß der Norm RTCA-DO 160-G Abschnitt 5 Cat A von -55 °C bis 400 °C und einer zweiten Wärmebehandlung bei -196 °C für 1 Stunde, und

-- ein Isolierteil (1) gebildet wird, das eine Wärmeleitfähigkeit von weniger als 100 mW/m.K bei 20 °C und in einer Umgebung unter Atmosphärendruck aufweist.

12. Verfahren nach Anspruch 11, wobei vor dem Schritt des Erzeugens des Unterdrucks ein organisches oder anorganisches Kernmaterial (5) zwischen den beiden Metallblechen oder den beiden Metallblechabschnitten eingeschlossen wird.


**Claims**

1. An insulating part comprising a sealed casing defining an inner enclosure (7) :

   - under a vacuum, and/or
   - under a controlled atmosphere containing a gas having a thermal conductivity that is lower than 26 mW/m.K,

   the part having a thermal conductivity of less than 100 mW/m.K at 20 °C and in an environment under atmospheric pressure, the sealed casing (3) comprising at least one thin metal sheet (30, 31) having a thickness of less than 1 mm and the metal of which is selected from among the group consisting of stainless steel, titanium, aluminium and other metals having a thermal conductivity of less than 300 W/m.K at 20 °C and in an environment under atmospheric pressure, said at least one thin metal sheet (30, 31) being welded peripherally to keep the enclosure under said low pressure and/or in said controlled atmosphere, the weld, which is continuous, having a leakage rate of less than $10^{-6}$ Pa.m$^3$/s, after a first thermal treatment according to the standard RTCA-DO 160-G, section 5, Cat. A from - 55 °C to 400 °C, and a second thermal treatment at -196 °C for 1 hour.

2. The part of claim 1, wherein the sealed casing surrounds a core material (5) comprising an organic or inorganic porous thermal insulation contained in the inner enclosure (7).

3. The part of claim 1, wherein the sealed casing contains a thermoreflective screen (50).

4. The part of claim 1, wherein said at least one thin metal sheet (30, 31) is corrugated.

5. The part of one of the preceding claims, wherein said at least one thin metal sheet (30, 31) has the following:

   - a hardness ranging from 90 HV to 670 HV,
   - a mechanical strength Rm greater than or equal to 20 MPa,
   - an elongation at break ranging from 5% to 50%

6. An assembly intended to reduce the leakage of heat from a structure (13), the assembly comprising the insulating part (1) of one of the preceding claims and a sensor (56) to be installed on a second face of the insulating part opposite to a first face facing said structure, the sensor being sensitive to temperature information or to visual, acoustic, mechanical, electrical or magnetic information.

7. The assembly of claim 6, wherein the sensor (56) is a temperature sensor, a strain sensor, an impedance sensor or an acoustic sensor.

8. A connecting pylon between an engine of an aircraft and a wing (11) or a fuselage (110) of said aircraft, the connecting pylon comprising the insulating part (1) of one of claims 1 to 5, or the assembly of claim 6 or 7.

9. An aircraft engine nacelle comprising an internal fixed structure (17) provided with said insulating part (1) of one of claims 1 to 5, or the assembly of claim 6 or 7, the insulating part having a curved shape.

10. A heat exchanger (60) or a storage tank (61):

    - subjected to a temperature ranging from -150 °C to -273 °C and to a temperature difference between an internal volume (65) and an external environment (EXT; 67) greater than 100 °C;
    - and comprising at least one said insulating part (1) of one of claims 1 to 5.

11. A method for manufacturing an insulating part (1), comprising steps wherein:

- two metal sheets (30, 31) or two portions of a said metal sheet are provided, a space (70) being left between them, the or each metal sheet having a thickness of less than 1 mm with a metal selected from among the group consisting of stainless steel, titanium, aluminium and other metals having a thermal conductivity of less than 300 W/m.K at 20 °C and in an environment under atmospheric pressure;
- the metal sheet(s) is or are placed in a vacuum chamber (65);
- in said vacuum chamber (65) is established :

-- a low pressure lower than $10^5$ Pa, or,
-- a controlled atmosphere, created by providing a gas having a thermal conductivity that is lower than 26 mW/m.K,

and said metal sheets (30, 31) or portions of said metal sheet are continuously welded one to another within the chamber, so that:

-- said space (70) defines an inner enclosure (7) under low pressure and/or controlled atmosphere;
-- the weld (6) has a leakage rate of less than $10^{-6}$ Pa.m$^3$/s, after a first thermal treatment according to the standard RTCA-DO 160-G, section 5, Cat A from -55 °C to 400 °C, and a second thermal treatment at -196 °C for 1 hour;
-- and an insulating part (1) is formed, which has a thermal conductivity of less than 100 mW/m.K at 20 °C and in an environment under atmospheric pressure.

12. The method of claim 11, wherein, prior to the step of establishing the low pressure, an organic or inorganic core material (5) is enclosed between the two metal sheets or the two portions of said metal sheet.

FIG.1

FIG.2

FIG.3

FIG.4

FIG.5

FIG.6

FIG.7

FIG.8

FIG.9

FIG.10

FIG.11

FIG.12

FIG.13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9157230 B
- JP 2006275186 A
- FR 2996850 A
- FR 29966856